# FASCICULE DE BREVET EUROPEEN

(11) **EP 2 855 140 B1**
(45) Date de publication et mention de la délivrance du brevet: **01.07.2020**
(21) Numéro de dépôt: 13725148.4
(22) Date de dépôt: 24.05.2013
(51) Int. Cl.: B32B 3/08, B32B 3/26, B32B 27/36, B32B 27/12, B32B 3/12, B32B 5/02, B32B 27/10

(54) **PROCÉDÉ DE FABRICATION D'UNE PIÈCE D'ÉQUIPEMENT RENFORCÉE, NOTAMMENT POUR UN VÉHICULE AUTOMOBILE**
VERFAHREN ZUR HERSTELLUNG EINES TEILS EINER VERSTÄRKTEN AUSRÜSTUNG, INSBESONDERE FÜR EIN KRAFTFAHRZEUG
METHOD FOR PRODUCING A PIECE OF REINFORCED EQUIPMENT, IN PARTICULAR FOR A MOTOR VEHICLE

(30) Priorité: 24.05.2012 FR 1254774
(43) Date de publication de la demande: 08.04.2015
(73) Titulaire: Faurecia Automotive Industrie, 92000 Nanterre (FR)
(72) Inventeur: DECORME, Jacques, F-08900 Montcy Notre Dame (FR); JEUNESSE, Steve, F-08210 Mouzon (FR); PERRIN, Hugues, F-08200 Sedan (FR)
(74) Mandataire: Lavoix
(86) Numéro de dépôt international: PCT/EP2013/060717
(87) Numéro de publication internationale: WO 2013/174968

(56) Documents cités:
- WO-A1-93/12344
- WO-A1-2007/050536
- FR-A1- 2 432 635
- GB-A- 2 046 861

## Description

La présente invention concerne un procédé de fabrication d'une pièce d'équipement renforcée, notamment pour un véhicule automobile, et une telle pièce d'équipement renforcée.

Plus particulièrement, l'invention concerne par exemple une pièce d'équipement destinée à constituer une pièce structurante dans un véhicule automobile, telle qu'une tablette ou un faux-plancher.

On connaît déjà, dans l'état de la technique, notamment d'après US 2006/0141206 ou FR 2 918 923, un procédé de fabrication d'une pièce d'équipement de véhicule automobile, du type comprenant une étape d'assemblage d'un écarteur entre des première et seconde peaux.

On forme ainsi une pièce composite de type sandwich. Cette pièce reçoit généralement un parement le plus souvent de type moquette, touffetée ou aiguilletée.

Habituellement, l'écarteur est du type en nid d'abeille.

Le procédé comporte également une étape de renforcement de la pièce, au cours de laquelle un élément de renfort en forme de cadre est rapporté sur la périphérie de la pièce. Toutefois, il apparaît qu'un tel renfort est peu efficace dans le cas d'une pièce formant un panneau de grandes dimensions, par exemple un faux plancher de véhicule automobile. Or, un tel faux plancher est généralement soumis à des charges élevées, si bien que ce renfort n'est pas satisfaisant dans ce cas.

D'autres procédés de fabrication sont par exemple décrits dans WO 9 312 344, WO 2007 050536, FR 2 432 635 ou GB 2 046 861.

On connaît également d'autres procédés de fabrication du même type, dans lesquels des éléments de renfort sont rapportés sur la première ou seconde peau, modifiant ainsi la géométrie générale et l'aspect de la pièce d'équipement. En particulier, un tel procédé ne permet pas de réaliser une pièce d'équipement présentant deux surfaces planes. Or, les cahiers des charges constructeurs requièrent souvent que les pièces structurelles, telles que les faux planchers pour coffre de véhicule automobile, soient réversibles. Une telle pièce avec éléments de renforts externes rapportés ne convient donc pas.

L'invention a notamment pour but de remédier à ces inconvénients, en fournissant un procédé de fabrication d'une pièce d'équipement renforcée de manière efficace, sans que des éléments de renforts viennent modifier la géométrie générale de la pièce d'équipement.

A cet effet, l'invention a notamment pour objet un procédé de fabrication d'une pièce d'équipement de véhicule automobile selon la revendication 1.

L'élément de renfort étant agencé dans la cavité de forme complémentaire, il est intégré dans le volume de l'écarteur, et ne modifie donc pas la géométrie générale de la pièce d'équipement. La géométrie générale de l'écarteur n'est pas non plus modifiée par la présence de l'élément de renfort, si bien que l'écarteur peut être manipulé au cours de la fabrication de la pièce d'équipement de la même manière qu'un écarteur classique, sans risquer de détériorer les outils utilisés au cours du procédé de fabrication.

Par ailleurs, ce procédé est tout à fait adapté pour le renfort de pièces d'équipement de grandes dimensions. En effet, dans le cas d'une telle pièce d'équipement, il est possible répartir plusieurs éléments de renfort dans l'écarteur pour renforcer l'ensemble de la pièce d'équipement.

Enfin, on notera que la réalisation de la cavité par déformation permet d'assurer une continuité des contraintes dans l'écarteur, ce qui ne serait pas le cas si la cavité était par exemple réalisée par découpage dans l'écarteur.

Un procédé selon l'invention peut comporter en outre l'une ou plusieurs des caractéristiques suivantes, prises seules ou selon toutes les combinaisons techniquement possibles.
- L'étape d'insertion comporte l'empilement de l'écarteur et de l'élément de renfort dans une presse, et la compression cet empilement de sorte que l'élément de renfort comprime localement l'écarteur pour former la cavité.
- L'étape d'insertion comporte la compression de l'écarteur, au moyen d'une presse comprenant une empreinte de forme et de dimensions similaires à celles de l'élément de renfort, de manière à former la cavité, puis l'insertion de l'élément de renfort dans la cavité ainsi formée.
- L'étape d'insertion comporte le collage de l'élément de renfort dans la cavité.
- Le procédé de fabrication comporte, préalablement à l'étape d'assemblage, une étape de fabrication de l'écarteur, sous la forme d'une plaque alvéolée dont les alvéoles sont réalisées au moyen d'une étireuse et s'étendent selon l'épaisseur de la plaque.
- Le procédé de fabrication comporte, préalablement à l'étape d'assemblage, une étape de fabrication d'au moins l'une des première et seconde peau, comprenant : la fourniture d'une nappe de base comportant des fibres en céramique et des fibres de polymère thermofusible ; la disposition d'une première feuille de matériau poreux sur la première face de la nappe et d'une deuxième feuille de matériau poreux sur la deuxième face de la nappe ; le chauffage et la compression de la nappe de base sur au moins une paroi de support pour faire fondre les fibres de polymère thermofusible et pour faire adhérer le polymère fondu aux fibres de céramique afin d'obtenir une nappe pré-formée, les feuilles de matériau poreux confinant alors entre elles le matériau polymère fondu issu des fibres de polymère thermofusible, et les feuilles de matériau poreux étant liées à la nappe pour constituer un corps composite ; et le confinement de la nappe pré-formée et des feuilles dans un moule sous pression, et régulé en température, pour constituer une nappe formée, le polymère de la nappe formée étant avantageusement au moins en partie cristallisé.

L'invention concerne également une pièce d'équipement de véhicule automobile, comprenant un écarteur plastiquement déformable, assemblé entre des première et seconde peaux, caractérisé en ce qu'elle comporte au moins un élément de renfort inséré dans une cavité ménagée dans l'écarteur, ladite cavité présentant des dimensions complémentaires de celles de l'élément de renfort, et en ce que les première et seconde peaux sont collées à l'écarteur comprenant le renfort.

Avantageusement, la pièce d'équipement comporte l'une ou plusieurs des caractéristiques suivantes.
- L'écarteur présente la forme d'une plaque alvéolée dont les alvéoles s'étendent selon l'épaisseur de la plaque, l'écarteur étant de préférence réalisé dans un matériau fibreux, par exemple en carton.
- Chacune des première et seconde peaux comporte : une nappe comportant des fibres en céramique et des fibres de polymère thermofusible ; une première feuille de matériau poreux liée à une première face de la nappe et d'une deuxième feuille de matériau poreux liée à une deuxième face de la nappe, de façon à constituer un corps composite, chaque feuille de matériau poreux présentant de préférence une épaisseur inférieure à celle de la nappe.
- L'élément de renfort présente une forme allongée, et de préférence une section transversale rectangulaire, triangulaire ou trapèzoïdale.

L'invention sera mieux comprise à la lecture de la description qui va suivre, donnée uniquement à titre d'exemple et faite en se référant aux figures annexées, parmi lesquelles :
- la figure 1 est une vue partielle en coupe d'une pièce d'équipement selon un exemple de mode de réalisation de l'invention ;
- les figures 2 et 3 sont des vues en coupe de la pièce d'équipement de la figure 1 au cours d'une étape d'insertion d'éléments de renfort dans un écarteur de la pièce, selon un premier mode de réalisation de son procédé de fabrication ;
- les figures 4 à 7 sont des vues en coupe de la pièce d'équipement de la figure 1 au cours d'une étape d'insertion d'éléments de renfort dans un écarteur de la pièce, selon un deuxième mode de réalisation de son procédé de fabrication.

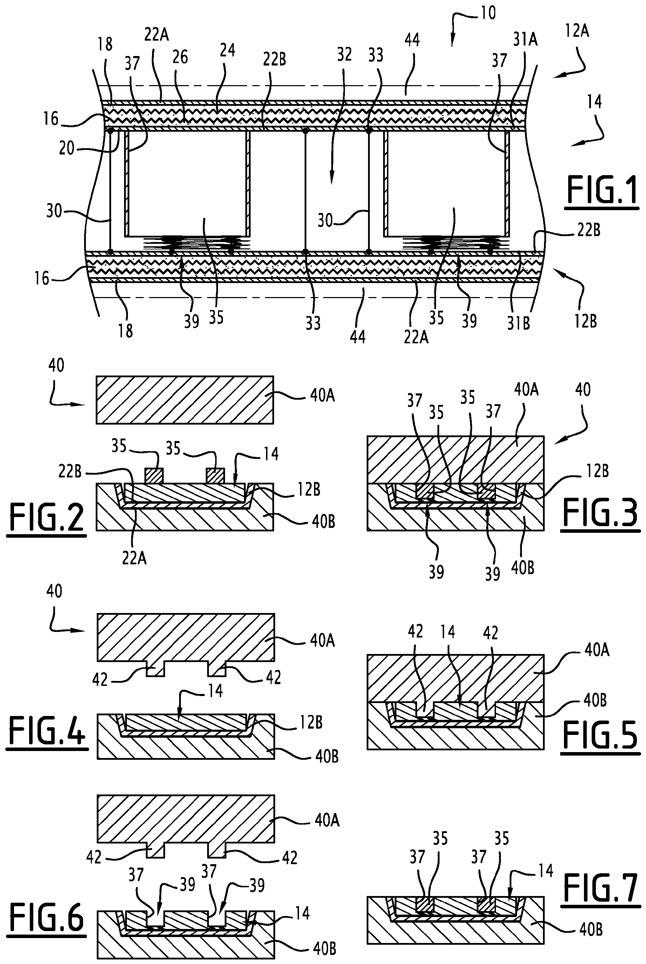

On a représenté sur la figure 1 une pièce d'équipement 10 de véhicule automobile, réalisée par un procédé de fabrication selon l'invention.

La pièce 10 est avantageusement une pièce structurante du véhicule automobile, par exemple une tablette, telle qu'une tablette arrière de masquage de coffre, un faux plancher d'habitacle ou de coffre, ou un sous-moteur.

La pièce 10 comporte une première peau 12A, une deuxième peau 12B et un écarteur intermédiaire 14. Les peaux 12A, 12B sont fixées sur des faces opposées de l'écarteur 14.

Conformément au mode de réalisation décrit, chaque peau 12A, 12B est une peau composite. En effet, chaque peau composite 12A, 12B comprend une nappe centrale 16 présentant une première face 18 et une deuxième face 20, une première feuille 22A fixée sur la première face 18 de la nappe centrale 16 et une deuxième feuille 22B fixée sur la deuxième face 20 de la nappe centrale 16.

Chaque peau composite 12A, 12B présente avantageusement une épaisseur inférieure à celle de l'écarteur 14. Plus généralement, l'épaisseur de chaque corps composite 12A, 12B est inférieure à 3 mm et notamment comprise entre 0,6 mm et 2 mm.

La masse surfacique de chaque peau composite 12A, 12B est inférieure à 3000 g/m². Elle est notamment comprise entre 600 g/m² et 1800 g/m². La masse volumique de chaque peau composite 12A, 12B est inférieure à 1900 kg/m³, et est notamment comprise entre 500 kg/m³ et 1500 kg/m³.

Avantageusement, la nappe centrale 16 est du type désigné par l'appellation « Sommold », c'est-à-dire qu'elle comporte une pluralité de fibres de céramique 24, par exemple des fibres de verre, et une matrice en polymère 26 liant les fibres de céramique 24 entre elles. La matrice en polymère est réalisée à partir de fibres d'un polymère thermofusible. La matrice en polymère 26 est avantageusement réalisée à base d'un polyester saturé thermoplastique, différent d'un polyester insaturé thermodur. Dans un exemple, le polyester saturé est un polyéthylène téréphtalate (PET) obtenu par polycondensation de l'acide téréphtalique avec l'éthylène glycol. Le polyéthylène téréphtalate est par exemple modifié avec du glycol. En variante, le polyester est un polybuthylène téréphtalate (PBT) formé par polycondensation de l'acide téréphtalique et du butane-2, 3-diol. Conformément à d'autres variantes, le polymère 26 est un polyoléfine, ou un polyamide.

Chaque feuille de matériau poreux 22A, 22B présente une épaisseur inférieure à celle de la nappe centrale 16. Avantageusement, l'épaisseur de chaque feuille 22A, 22B est très inférieure à celle de la nappe centrale 16 et est par exemple inférieure à 5% de l'épaisseur maximale de la nappe centrale 16.

Chaque feuille 22A, 22B présente une masse surfacique inférieure à 100 g/m², notamment inférieure à 80 g/m², avantageusement inférieure à 60 g/m².

Chaque feuille 22A, 22B est poreuse. Elle présente ainsi une pluralité d'ouvertures qui déterminent sa mouillabilité par capillarité. Ainsi, les feuilles 22A, 22B sont reliées à la nappe centrale 16 par pénétration du polymère 26 de la nappe centrale 16 dans les feuilles 22A, 22B par capillarité. Avantageusement, le polymère 26 de la nappe centrale 16 pénètre le plus possible, au moins sur la moitié de l'épaisseur des feuilles 22A, 22B, mais sans les traverser. Ainsi, les feuilles 22A, 22B assurent une continuité avec la nappe 16 et présentent des propriétés mécaniques similaires. Elles ne constituent pas une interface fragilisée qui détériorerait les performances des structures auxquelles participeront les corps composites 12A, 12B.

Avantageusement, la première feuille 22A est réalisée à base non-tissé de type filé fondu (ou « spunbonded »), soufflé fondu (ou « melt blown ») ou même aiguilleté voie sèche. Les fibres constituant les non-tissés ont une température de fusion supérieure à celle du polymère utilisé pour la réalisation de la nappe 16. Ce non tissé présente de préférence une masse surfacique inférieure à 80 g/m².

Avantageusement, la seconde feuille 22B est constituée d'une feuille de papier. Le papier présente une masse surfacique inférieure à 50 g/m². Il est par exemple constitué de fibres végétales, minérales, animales ou synthétiques fabriquées ou d'un mélange de ces fibres par dépôt et compression de fibres sur un dispositif de formation appropriée.

Du fait de la présence des feuilles 22A, 22B, la nappe centrale 16 est confinée entre les feuilles 22A, 22B.

Les feuilles 22A, 22B recouvrent avantageusement la totalité des faces 18, 20 de la nappe 16, notamment plus de 95% de l'étendue de chaque face 18, 20.

La deuxième peau 12B est analogue à la première peau 12A, et ne sera donc pas décrite plus en détail.

On notera que chaque peau 12A, 12B est généralement réalisée de manière connue en soi, pat thermoformage, ou par laminage continu lorsqu'on souhaite réaliser une peau 12A, 12B de forme générale plane.

Conformément à une variante non représentée, chaque peau 12A, 12B pourrait être constituée d'une nappe 16, et ne pas comporter de feuille 22A, 22B.

L'écarteur 14 en lui-même est interposé entre les corps 12A, 12B. Sa masse volumique est par exemple comprise entre 10 kg/m³ et 500 kg/m³ et plus particulièrement entre 20 kg/m³ et 50 kg/m³

Avantageusement, l'écarteur 14 est réalisé à base d'une structure alvéolaire ou en nid d'abeille.

Ainsi, l'écarteur 14 présente une pluralité de parois 30 sensiblement perpendiculaires à un plan moyen de la pièce 10, les parois 30 délimitant des espaces centraux 32 de contour fermé formant les alvéoles. Ainsi, chaque espace central ou alvéole 32 débouche en regard d'une feuille respective 22B d'un corps 12A, 12B. Les alvéoles 32 définissent par exemple des mailles polygonales, notamment hexagonales.

La dimension transversale maximale des mailles polygonales, prise parallèlement à un plan moyen P de la pièce, est supérieure à 5 mm, et est par exemple comprise entre 5 mm et 20 mm, notamment entre 8 mm et 10mm.

En variante, les mailles sont ondulées. Dans ce cas, l'amplitude des ondulations est comprise entre 5 et 15mm et le pas (distance entre deux crêtes d'ondulation) est compris entre 5 et 20mm, avantageusement 8 et 16 mm

L'écarteur 14 est avantageusement réalisé en un matériau léger, tel que du papier ou du carton.

La masse surfacique de l'écarteur 14 est faible. Cette masse est notamment inférieure à 2000 g/m², et est avantageusement comprise entre 50 g/m² et 1500 g/m². De préférence, cette masse surfacique est inférieure à 1500 g/m² et est sensiblement comprise entre 400 g/m² et 1200 g/m².

Ainsi, la pièce 10 présente une légèreté adéquate, du fait de la faible densité de l'écarteur 14.

L'écarteur 14 présente avantageusement une épaisseur supérieure à 2 mm, et par exemple comprise entre 2 mm et 100 mm, notamment entre 5 mm et 30 mm.

La tranche des parois 30 délimite les faces opposées 31A, 31 B de l'écarteur 14 sur lesquelles sont assemblés respectivement la première peau 12A et la deuxième peau 12B.

Avantageusement, un liant 33 est utilisé pour fixer la première peau 12A sur la première face 31A et la deuxième peau 12B sur la deuxième face 31B. Ce liant est par exemple une colle, un film ou un autre matériau adhésif compatible avec la composition des corps 12A, 12B et de l'écarteur 14.

Ce liant 33 peut faire partie des familles époxy, acrylique, méthacrylate, polyuréthane ou acétate de polyvinyle, ou de la famille des colles aqueuses du type colle à bois, telles les colles amylacées ou à base d'ester de cellulose.

Dans une variante, l'écarteur 14 est formé par une mousse, telle qu'une mousse polyuréthane, polyoléfine, polyester ou polystyrène ou encore une mousse à base de déchets de mousse, ou par un matériau tel que du polystyrène expansé, offrant une masse surfacique inférieure à celle du premier corps 12A et du deuxième corps 12B.

Par ailleurs l'écarteur 14 peut garder une structure en nid d'abeille mais d'une autre nature que le carton, par exemple en aluminium, en matière polymérique telle les polyoléfines ou les polyesters.

La seconde feuille 22B, particulièrement s'il s'agit d'un papier, constitue une interface avec l'écarteur 14, dans le cas où l'écarteur 14 est réalisé en carton, lui-même à base de fibres cellulosiques. Une colle de type colle à bois réalise une liaison optimale.

Lorsque l'écarteur 14 est réalisé dans un autre matériau, la cellulose s'avère compatible avec un grand nombre de types de colles différents aussi bien hydrophiles qu'hydrophobes.

La seconde feuille 22B de papier apparaît ainsi, lorsqu'elle est convenablement mouillée par le polymère présent dans les nappes 16, comme une interface polyvalente dans ce type de structure sandwich.

Afin de renforcer la pièce 10, cette pièce 10 comporte au moins un élément de renfort 35 (par exemple deux éléments de renfort dans l'exemple représenté). Le nombre d'éléments de renfort 35 dépend notamment des dimensions de la pièce 10, afin d'assurer un renfort optimal de cette pièce 10 même lorsqu'elle présente de grandes dimensions.

Dans l'exemple décrit, chaque élément de renfort 35 présente une forme générale allongée, par exemple parallélépipédique dont la section transversale représentée sur les figures est rectangulaire. En variante, la section transversale de chaque élément de renfort 35 pourrait être triangulaire ou trapézoïdale. Conformément à une autre variante, chaque élément de renfort pourrait présenter une forme générale en U.

De préférence, l'élément de renfort 35 est réalisé dans un matériau métallique. En variante, l'élément de renfort peut être réalisé dans un matériau polymère à haut module d'élasticité, tel que le PA (polyamide) ou le PEEK (polyétheréthercétone), associé à des fibres de carbonne ou d'origine naturelle. L'élément de renfort peut être réalisé par moulage, extrusion ou pultrusion.

Conformément à une autre variante, l'élément de renfort 35 peut être réalisé par l'assemblage ou l'emboîtement de divers profilés, par exemple des profilés à section transversale en forme de U, emboîtés et/ou collés ensemble.

Chaque élément de renfort 35 est intégré dans le volume de l'écarteur 14. A cet effet, une cavité 37, présentant des dimensions complémentaires à celles de l'élément de renfort 35 correspondant, est ménagée dans l'écarteur 14, au cours du procédé de fabrication de la pièce 10, qui sera décrit ultérieurement.

On notera que chaque cavité 37 est réalisée par déformation de l'écarteur 14, si bien que l'écarteur 14 présente une zone comprimée 39 au droit de chaque cavité 37. En formant la cavité 37 par déformation, plutôt que par exemple par découpage, on assure une continuité des contraintes dans l'écarteur 14.

Un procédé de fabrication de la pièce d'équipement 10 selon un premier exemple de mode de réalisation va maintenant être décrit, notamment en référence aux figures 2 et 3.

Le procédé comporte des étapes préliminaires de fabrication de l'écarteur 14 et des peaux 12A, 12B, de manière connue en soi.

En particulier, l'étape de fabrication de chaque peau 12A, 12B comporte :
- la fourniture d'une nappe de base 16 comportant des fibres en céramique et des fibres de polymère thermofusible ;
- la disposition d'une première feuille de matériau poreux 22A sur la première face 18 de la nappe 16 et d'une deuxième feuille de matériau poreux 22B sur la deuxième face 20 de la nappe 16, chaque feuille de matériau poreux 22A, 22B présentant avantageusement une épaisseur inférieure à celle de la nappe 16 ;
- le chauffage et la compression de la nappe de base 16 sur au moins une paroi de support pour faire fondre les fibres de polymère thermofusible et pour faire adhérer le polymère fondu aux fibres de céramique afin d'obtenir une nappe pré-formée, les feuilles de matériau poreux 22A, 22B confinant alors entre elles le matériau polymère fondu issu des fibres de polymère thermofusible, et les feuilles de matériau poreux 22A, 22B étant liées à la nappe 16 pour constituer un corps composite ;
- le confinement de la nappe pré-formée et des feuilles 22A, 22B dans un moule sous pression, et régulé en température, pour constituer une nappe formée 16, le polymère de la nappe formée 16 étant avantageusement au moins en partie cristallisé.

Par ailleurs, au cours de l'étape de fabrication de l'écarteur 14, cet écarteur 14 est fabriqué sous la forme d'une plaque alvéolée dont les alvéoles sont réalisées au moyen d'une étireuse et s'étendent selon l'épaisseur de la plaque.

Le procédé comporte notamment une étape d'assemblage de l'écarteur 14 entre les première 12A et seconde 12B peaux, en particulier au moyen d'une presse 40, également appelée « configurateur », représentée sur les figures 2 et 3. La presse 40 comporte notamment des premier 40A et second 40B plateaux, ainsi que des moyens pour déplacer les premier 40A et second 40B plateaux l'un par rapport à l'autre afin d'appliquer un effort de pression à un élément agencé entre ces premier 40A et second 40B plateaux.

Au cours de cette étape d'assemblage, la seconde peau 12B est disposée sur le second plateau 40B de la presse 40. En particulier, la feuille de non tissé 22A repose sur le second plateau 40B, et la feuille de papier 22B est tournée vers le premier plateau 40A.

La première face de l'écarteur 14 est enduite de liant 33, par exemple au moyen d'une enduiseuse à rouleau, puis cet écarteur 14 est disposé contre la feuille de papier 22B de la seconde peau 12B, afin d'y être solidarisé comme cela est représenté sur la figure 2.

Chaque élément de renfort 35 est alors disposé sur la seconde face de l'écarteur 14, là où l'on souhaite réaliser la cavité 37 qui recevra cet élément de renfort 35, comme cela est représenté sur la figure 2.

Le premier plateau 40A de la presse 40 est alors déplacé vers le second plateau 40B, de façon à compresser l'empilement formé par l'écarteur 14 et l'élément de renfort 35. Ainsi, l'élément de renfort 35 comprime localement l'écarteur 14, formant ainsi la cavité 37 par déformation, et la zone comprimée 39 correspondante, comme cela est représenté sur la figure 3.

On notera que la pression exercée par la presse 40 est relativement faible, cette pression étant uniquement choisie pour permettre la pénétration de l'élément de renfort 35 dans l'écarteur 14 en déformant plastiquement cet écarteur 14. Du fait de cette faible pression, les risques d'endommagement de la presse 40 en cas de mauvais agencement de l'élément de renfort 35 sont limités.

On notera que la hauteur de chaque élément de renfort 35 dans la direction d'écrasement du premier plateau 40A vers le second plateau 40B est inférieure à l'épaisseur de l'écarteur 14 dans cette même direction. Plus précisément, l'épaisseur de l'écarteur 14 dans cette direction est égale à la somme de la hauteur de l'élément de renfort 35 et de la hauteur de la zone comprimée 39 correspondante.

Conformément à une variante, chaque élément de renfort 35 peut être enduit de liant, notamment sur sa face en contact avec la zone comprimée 39, afin d'assurer la continuité des efforts entre l'écarteur 14 et l'élément de renfort 35. Le liant est par exemple une colle, et avantageusement une colle thixotrope, propre à fluer dans toute l'épaisseur de la zone comprimée 39 lors de la compression de cette zone comprimée 39.

Dans la suite de l'étape d'assemblage, la seconde face de l'écarteur 14 est enduite de liant 33, puis la première peau 12A, notamment sa feuille de papier 22B, est rapportée sur cette seconde face pour y être solidarisée.

En variante, le liant 33 est déposé sur la première peau 12A, notamment sur la feuille 22B.

Le procédé comporte ensuite de préférence une étape complémentaire de solidarisation, au cours de laquelle l'ensemble de l'écarteur 14 et des peaux 12A, 12B est rapporté dans un configurateur à plaques chauffantes. Ce configurateur est chauffé jusqu'à la température de fusion du polymère thermoplastique contenu dans les peaux 12A, 12B. Avantageusement, le liant 33 est choisi pour présenter une température d'activation sensiblement égale à ladite température de fusion.

L'ensemble porté à cette température est alors compressé pour faire fondre le thermoplastique et assurer une adhésion parfaite de l'écarteur 14 sur les feuilles papier 22B, notamment par activation du liant.

Le procédé comporte ensuite une étape de conformage, au cours de laquelle ledit ensemble est rapporté dans un moule de thermoformage, froid ou chauffé à la température de cristallisation du polymère thermoplastique des peaux 12A, 12B. Ce moule de thermoformage applique alors une forte pression sur l'ensemble de façon à comprimer les peaux 12A, 12B jusqu'à une épaisseur souhaitée, et à permettre la découpe de la pièce aux dimensions requises sur ses bords.

Enfin, le procédé peut comporter une étape de parement de la pièce d'équipement 10, au cours de laquelle des parements 44 textile (aiguilletés ou touffetés) ou plastique (film ou Thermoplastique oléfine TPO) à base de polymère dont la température de fusion est supérieure à celle du polymère des peaux 12A, 12B, sont rapportée sur au moins l'une des faces de la pièce d'équipement 10. On notera que cette étape de parement peut être réalisée en insérant le parement dans le configurateur chauffant ou le moule de thermoformage décrits précédemment.

On obtient ainsi une pièce d'équipement 10 telle que représentée sur la figure 1 et décrite précédemment.

Un procédé de fabrication de la pièce d'équipement 10 selon un deuxième exemple de mode de réalisation va maintenant être décrit, notamment en référence aux figures 4 à 7. Seules les différences avec le premier mode de réalisation seront détaillées ci-dessous, et les éléments analogues à ceux du premier mode de réalisation seront désignés par des références identiques.

Conformément à ce deuxième mode de réalisation, le premier plateau 40A de la presse 40 présente au moins une emprunte 42, faisant saillie du premier plateau 40A vers le second plateau 40B, et présentant des dimensions et une forme identique à celles de l'élément de renfort 35. Dans l'exemple représenté sur la figure 4, le premier plateau 40A comporte deux telles empruntes 42.

La seconde peau 12B et l'écarteur 14 sont disposés sur le second plateau 40B, de la même manière que dans le premier mode de réalisation décrit précédemment.

Comme cela est représenté sur la figure 5, le premier plateau 40A est déplacé vers le second plateau 40B, de sorte que les empruntes 42 pénètrent l'écarteur 14 en le déformant plastiquement.

Ainsi, les empruntes 42 forment les cavités 37 et les zones comprimées 39, comme cela est représenté sur la figure 6.

Puisque les empruntes 42 présentent la même forme et les mêmes dimensions que les éléments de renfort 35, des éléments de renfort 35 peuvent être insérés dans les cavités 37 ainsi formées, comme cela est représenté sur la figure 7. Avantageusement, chaque élément de renfort 35 est enduit de liant pour être solidarisé à la cavité 37 correspondante.

Dans la suite de l'étape d'assemblage, la seconde face de l'écarteur 14 est enduite de liant 33, puis la première peau 12A est rapportée sur cette seconde face pour y être solidarisée, comme dans le premier mode de réalisation. On obtient ainsi une pièce d'équipement 10 telle que représentée sur la figure 1 et décrite précédemment.

On notera que l'invention permet de réaliser une pièce d'équipement 10 légère et résistante à la flexion, même à des températures élevées, c'est-à-dire dans des conditions de fluage. Du fait de cette bonne résistance à la flexion, conférée par le ou les éléments de renfort 35, il est possible de réaliser les peaux 12A, 12B à partir de polymères thermoplastiques peu performants, tels que des polyoléfines.

## Revendications

1. Procédé de fabrication d'une pièce d'équipement (10) de véhicule automobile, comprenant une étape d'assemblage d'un écarteur (14) plastiquement déformable entre une première (12A) et une seconde (12B) peau, **caractérisé en ce qu'**il comporte une étape d'insertion d'au moins un élément de renfort (35) dans l'écarteur (14), comprenant la déformation de l'écarteur (14) de façon à former une cavité (37) de dimensions complémentaires de celles de l'élément de renfort (35) et **en ce que** l'étape d'assemblage comporte le collage de l'écarteur (14) comprenant le renfort (35) avec les première (12A) et seconde (12B) peaux.

2. Procédé de fabrication selon la revendication 1, dans lequel l'étape d'insertion comporte l'empilement de l'écarteur (14) et de l'élément de renfort (35) dans une presse (40), et la compression cet empilement de sorte que l'élément de renfort (35) comprime localement l'écarteur (14) pour former la cavité (37).

3. Procédé de fabrication selon la revendication 1, dans lequel l'étape d'insertion comporte la compression de l'écarteur (14), au moyen d'une presse (40) comprenant une empreinte (42) de forme et de dimensions similaires à celles de l'élément de renfort (35), de manière à former la cavité (37), puis l'insertion de l'élément de renfort (35) dans la cavité (37) ainsi formée.

4. Procédé de fabrication selon l'une quelconque des revendications précédentes, dans lequel l'étape d'insertion comporte le collage de l'élément de renfort (35) dans la cavité (37).

5. Procédé de fabrication selon l'une quelconque des revendications précédentes, comportant, préalablement à l'étape d'assemblage, une étape de fabrication de l'écarteur (14), sous la forme d'une plaque alvéolée dont les alvéoles sont réalisées au moyen d'une étireuse et s'étendent selon l'épaisseur de la plaque.

6. Procédé de fabrication selon l'une quelconque des revendications précédentes, comportant, préalablement à l'étape d'assemblage, une étape de fabrication d'au moins l'une des première (12A) et seconde (12B) peau, comprenant :
- la fourniture d'une nappe de base (16) comportant des fibres en céramique et des fibres de polymère thermofusible ;
- la disposition d'une première feuille de matériau poreux (22A) sur la première face (18) de la nappe (16) et d'une deuxième feuille de matériau poreux (22B) sur la deuxième face (20) de la nappe (16) ;
- le chauffage et la compression de la nappe de base (16) sur au moins une paroi de support pour faire fondre les fibres de polymère thermofusible et pour faire adhérer le polymère fondu aux fibres de céramique afin d'obtenir une nappe pré-formée, les feuilles de matériau poreux (22A, 22B) confinant alors entre elles le matériau polymère fondu issu des fibres de polymère thermofusible, et les feuilles de matériau poreux (22A, 22B) étant liées à la nappe (16) pour constituer un corps composite ;
- le confinement de la nappe pré-formée et des feuilles (22A, 22B) dans un moule sous pression, et régulé en température, pour constituer une nappe formée (16), le polymère de la nappe formée (16) étant avantageusement au moins en partie cristallisé.

7. Pièce d'équipement (10) de véhicule automobile, comprenant un écarteur (14) plastiquement déformable, assemblé entre des première (12A) et seconde (12B) peaux, **caractérisé en ce qu'**elle comporte au moins un élément de renfort (35) inséré dans une cavité (37) ménagée dans l'écarteur (14), ladite cavité (37) présentant des dimensions complémentaires de celles de l'élément de renfort (35), et **en ce que** les première (12A) et seconde (12B) peaux sont collées à l'écarteur (14) comprenant le renfort (35).

8. Pièce d'équipement (10) selon la revendication 7, dans laquelle l'écarteur (14) présente la forme d'une plaque alvéolée dont les alvéoles (32) s'étendent selon l'épaisseur de la plaque, l'écarteur (14) étant de préférence réalisé dans un matériau fibreux, par exemple en carton.

9. Pièce d'équipement (10) selon l'une quelconque des revendications 7 ou 8, dans laquelle chacune des première (12A) et seconde (12B) peaux comporte :
- une nappe (16) comportant des fibres en céramique et des fibres de polymère thermofusible ;
- une première feuille de matériau poreux (22A) liée à une première face (18) de la nappe (16) et d'une deuxième feuille de matériau poreux (22B) liée à une deuxième face (20) de la nappe (16), de façon à constituer un corps composite, chaque feuille de matériau poreux (22A, 22B) présentant de préférence une épaisseur inférieure à celle de la nappe (16).

10. Pièce d'équipement (10) selon l'une quelconque des revendications 7 à 9, dans laquelle l'élément de renfort (35) présente une forme allongée, et de préférence une section transversale rectangulaire, triangulaire ou trapézoïdale.

## Patentansprüche

1. Verfahren zur Herstellung eines Teils einer Ausrüstung (10) eines Kraftfahrzeugs, umfassend einen Schritt des Zusammenbauens eines plastisch verformbaren Abstandshalters (14) zwischen einer ersten (12A) und einer zweiten (12B) Haut, **dadurch gekennzeichnet, dass** es einen Schritt des Einführens mindestens eines Verstärkungselements (35) in den Abstandshalter (14) umfasst, umfassend das Verformen des Abstandshalters (14), um einen Hohlraum (37) mit komplementären Abmessungen zu denjenigen des Verstärkungselements (35) zu bilden, und dadurch, dass der Schritt des Zusammenbauens das Verkleben des Abstandshalters (14) umfasst, umfassend die Verstärkung (35) mit der ersten (12A) und zweiten (12B) Haut.

2. Verfahren zur Herstellung nach Anspruch 1, wobei der Schritt des Einführens das Stapeln des Abstandshalters (14) und des Verstärkungselements (35) in einer Presse (40) und das Komprimieren dieses Stapels umfasst, so dass das Verstärkungselement (35) lokal den Abstandshalter (14) komprimiert, um den Hohlraum (37) zu bilden.

3. Verfahren zur Herstellung nach Anspruch 1, wobei der Schritt des Einführens das Komprimieren des Abstandshalters (14) mit Hilfe einer Presse (40) umfasst, umfassend eine Vertiefung (42) mit einer ähnlichen Form und ähnlichen Abmessungen wie denjenigen des Verstärkungselements (35), um den Hohlraum (37) zu bilden, dann das Einführen des Verstärkungselements (35) in den so gebildeten Hohlraum (37).

4. Verfahren zur Herstellung nach einem der vorhergehenden Ansprüche, wobei der Schritt des Einführens das Verkleben des Verstärkungselements (35) im Hohlraum (37) umfasst.

5. Verfahren zur Herstellung nach einem der vorhergehenden Ansprüche, umfassend, vor dem Schritt des Zusammenbauens, einen Schritt des Herstellens des Abstandshalters (14) in Form einer Wabenplatte, wobei die Waben mit Hilfe einer Dehnbank durchgeführt werden und sich gemäß der Dicke der Platte erstrecken.

6. Verfahren zur Herstellung nach einem der vorhergehenden Ansprüche, umfassend, vor dem Schritt des Zusammenbauens, einen Schritt des Herstellens mindestens einer der ersten (12A) und zweiten (12B) Haut, umfassend:
- das Lieferen einer Basislage (16), umfassend Fasern aus Keramik und Fasern aus wärmeschmelzbarem Polymer;
- das Anordnen eines ersten Blatts aus porösem Material (22A) auf der ersten Seite (18) der Lage (16) und eines zweiten Blatts aus porösem Material (22B) auf der zweiten Seite (20) der Lage (16);
- das Erhitzen und das Komprimieren der Basislage (16) auf mindestens einer Stützwand, um die Fasern aus wärmeschmelzbarem Polymer schmelzen zu lassen, und um das geschmolzene Polymer an die keramischen Fasern haften zu lassen, um eine vorgeformte Lage zu erhalten, wobei die Blätter aus porösem Material (22A, 22B) dann zwischen sich das geschmolzene Polymermaterial eingrenzen, das aus den Fasern aus wärmeschmelzbarem Polymer stammt, und wobei die Blätter aus porösem Material (22A, 22B) an die Lage (16) gebunden sind, um einen Verbundkörper darzustellen;
- die Eingrenzung der vorgeformten Lage und der Blätter (22A, 22B) in eine Form unter Druck und temperaturgeregelt, um eine geformte Lage (16) darzustellen, wobei das Polymer der gebildeten Lage (16) vorteilhafterweise mindestens teilweise kristallisiert ist.

7. Ausrüstungsteil (10) eines Kraftfahrzeugs, umfassend einen plastisch verformbaren Abstandshalter (14), der zwischen einer ersten (12A) und zweiten (12B) Haut zusammengebaut ist, **dadurch gekennzeichnet, dass** er mindestens ein Verstärkungselement (35) umfasst, eingeführt in einen Hohlraum (37), der im Abstandshalter (14) angebracht ist, wobei der Hohlraum (37) komplementäre Abmessungen zu denjenigen des Verstärkungselements (35) aufweist, und dadurch, dass die erste (12A) und zweite (12B) Haut an den Abstandshalter (14), umfassend die Verstärkung (35), verklebt sind.

8. Ausrüstungsteil (10) nach Anspruch 7, wobei der Abstandshalter (14) die Form einer Wabenplatte aufweist, deren Waben (32) sich gemäß der Dicke der Platte erstrecken, wobei der Abstandshalter (14) vorzugsweise aus einem Fasermaterial hergestellt ist, z. B. aus Karton.

9. Ausrüstungsteil (10) nach einem der Ansprüche 7 oder 8, wobei jede der ersten (12A) und zweiten (12B) Haut Folgendes umfasst:
- eine Lage (16), umfassend Fasern aus Keramik und Fasern aus wärmeschmelzbarem Polymer;
- ein erstes Blatt aus porösem Material (22A), das mit einer ersten Seite (18) der Lage (16) verbunden ist, und eines zweites Blatt aus porösem Material (22B), das mit einer zweiten Seite (20) der Lage (16) verbunden ist, um einen Verbundkörper darzustellen, wobei jedes Blatt aus porösem Material (22A, 22B) vorzugsweise eine Dicke von weniger als derjenigen des Lage (16) darstellt.

10. Ausrüstungsteil (10) nach einem der Ansprüche 7 bis 9, wobei das Verstärkungselement (35) eine verlängerte Form und vorzugsweise einen rechtwinkligen, dreieckigen oder trapezförmigen Querschnitt aufweist.

## Claims

1. A method for manufacturing a motor vehicle equipment item (10), comprising a step for assembling a spacer (14) plastically deformable between a first (12A) and a second (12B) skin, **characterized in that** it includes a step for inserting at least one reinforcing element (35) into the spacer (14), comprising the deformation of the spacer (14) so as to form a cavity (37) with dimensions complementary to those of the reinforcing element (35) and **in that** the assembly step includes the gluing of the spacer (14) comprising the reinforcement (35) with the first (12A) and second (12B) skins.

2. The manufacturing method according to claim 1, wherein the insertion step includes the stacking of the spacer (14) and the reinforcing element (35) in a press (40), and the compression of this stack such that the reinforcing element (35) locally compresses the spacer (14) in order to form the cavity (37).

3. The manufacturing method according to claim 1, wherein the insertion step includes the compression of the spacer (14), using a press (40) comprising a cavity (42) with shape and dimensions similar to those of the reinforcing element (35), so as to form the cavity (37), then the insertion of the reinforcing element (35) into the cavity (37) thus formed.

4. The manufacturing method according to any one of the preceding claims, wherein the insertion step includes the gluing of the reinforcing element (35) in the cavity (37).

5. The manufacturing method according to any one of the preceding claims, including, prior to the assembly step, a step for manufacturing the spacer (14), in the form of a cellular plate, the cells of which are made using a stretcher and extend along the thickness of the plate.

6. The manufacturing method according to any one of the preceding claims, including, before the assembly step, a step for manufacturing at least one of the first (12A) and second (12B) skins, comprising:
- providing a base ply (16) including ceramic fibers and thermofusible polymer fibers;
- arranging a first sheet of porous material (22A) on the first face (18) of the ply (16) and a second sheet of porous material (22B) on the second face (20) of the ply (16);
- heating and compressing the base ply (16) on at least one support wall in order to melt the thermofusible polymer fibers and to adhere the molten polymer to the ceramic fibers in order to obtain a pre-formed ply, the sheets of porous material (22A, 22B) then confining the molten polymer material derived from the thermofusible polymer fibers to one another, and the sheets of porous material (22A, 22B) being connected to the ply (16) in order to form a composite body;
- confining the preformed ply and sheets (22A, 22B) in a pressurized, and temperature-controlled, mold, in order to form a shaped ply (16), the polymer of the shaped ply (16) advantageously being at least partially crystallized.

7. A motor vehicle equipment part (10), comprising a plastically deformable spacer (14), assembled between first (12A) and second (12B) skins, **characterized in that** it includes at least one reinforcing element (35) inserted into a cavity (37) arranged in the spacer (14), said cavity (37) having dimensions complementary to those of the reinforcing element (35), and **in that** the first (12A) and second (12B) skins are glued to the spacer (14) comprising the reinforcement (35).

8. An equipment item (10) according to claim 7, wherein the spacer (14) is in the form of a cellular plate, the cells (32) of which extend along the thickness of the plate, the spacer (14) preferably being made from a fibrous material, for example cardboard.

9. The equipment item (10) according to any one of claims 7 or 8, wherein each of the first (12A) and second (12B) skins includes:
- a ply (16) including ceramic fibers and thermofusible polymer fibers;
- a first sheet of porous material (22A) connected to a first face (18) of the ply (16) and a second sheet of porous material (22B) connected to a second face (20) of the ply (16), so as to form a composite body, each sheet of porous material (22A, 22B) preferably having a thickness smaller than that of the ply (16).

10. The equipment item (10) according to any one of claims 7 to 9, wherein the reinforcing element (35) has an elongated shape, and preferably a rectangular, triangular or trapezoidal cross-section.
